(19) Europäisches Patentamt

European Patent Office

Office européen des brevets

(11) EP 0 683 608 B1

(12) **EUROPÄISCHE PATENTSCHRIFT**

(45) Veröffentlichungstag und Bekanntmachung des Hinweises auf die Patenterteilung:
**20.01.1999 Patentblatt 1999/03**

(51) Int Cl.[6]: **H04N 5/455**

(21) Anmeldenummer: **95106424.5**

(22) Anmeldetag: **28.04.1995**

(54) **Einrichtung zur digitalen Demodulation der Bild- und Tonanteile eines Fernsehsignals**

Device for the digital demodulation of the picture and sound signal of a television signal

Dispositif de démodulation numérique des signaux d'image et de son d'un signal de télévision

(84) Benannte Vertragsstaaten:
**DE FR NL**

(30) Priorität: **20.05.1994 DE 4417724**

(43) Veröffentlichungstag der Anmeldung:
**22.11.1995 Patentblatt 1995/47**

(73) Patentinhaber: **ROBERT BOSCH GMBH**
**70442 Stuttgart (DE)**

(72) Erfinder: **Göckler, Heinz, Dr.**
**D-71522 Backnang (DE)**

(56) Entgegenhaltungen:
**EP-A- 0 321 681            DE-A- 3 305 918**
**GB-A- 1 456 502**

- **PATENT ABSTRACTS OF JAPAN vol. 009 no. 143 (E-322) ,18.Juni 1985 & JP-A-60 025392 (MATSUSHITA DENKI SANGYO KK) 8.Februar 1985,**

**Beschreibung**

Die Erfindung bezieht sich auf eine Einrichtung zur digitalen Demodulation der Bild- und Tonanteile eines Fernsehsignals, welches in Zwischenfrequenzlage vorliegt.

Aus der DE 33 05 918 C2 ist es bekannt ein Fernsehsignal in Zwischenfrequenzlage mittels einem A/D-Wandler abzutasten und die weitere Verarbeitung, insbesondere die Demodulation, digital vorzunehmen. Die Frequenz des Abtastsignals beträgt hierbei weniger als das Doppelte der Trägerfrequenz.

Die EP 62 872 B1 zeigt die Signalverarbeitung eines abgetasteten Zwischenfrequenzsignals als komplexwertiges Digitalsignal.

Die ältere Patentanmeldung EP-A-0 651 526, veröffentlicht am 3.5.95, offenbart ein Verfahren zur Aufbereitung eines digitalen Frequenzmultiplexsignals aus Fernseh-Kanalsignalen. Die Kanalsignale werden überabgetastet, mittels eines komplexen Halbbandfilters gefiltert und mittels eines komplexen Mischers zur Weiterverarbeitung in der Frequenz verschoben.

Aufgabe vorliegender Erfindung ist es für die digitale Demodulation der Bild- und Tonanteile eine aufwandsgünstige Einrichtung anzugeben. Diese Aufgabe wird durch die Merkmale des Patentanspruches 1 gelöst. Vorteilhafte Ausgestaltungen sind in den Unteransprüchen aufgezeigt. Die Einrichtung gemäß der Erfindung hat den Vorteil, die Aufteilung der Tonsignale in separate Zweige möglichst spät bei möglichst niedriger Abtastfrequenz erfolgt. Dies reduziert den Filteraufwand. Die Ton-FM-Demodulatoren können von ihrer Struktur her auf übliche UKW-FM-Demodulatoren angepaßt werden.

Die komplexe Trägerschwingung für die zuerst vorgenommene Umsetzung der Tonsignale kann auf einfache Weise aus der Umsetzungsstufe für das Bildsignal phasenstarr abgeleitet werden. Für die Tonsignal-Demodulation ist daher nur eine Frequenz- bzw. Phasenregelschleife, die eine geringe Schleifenverzögerung aufweist, notwendig.

Anhand der Zeichnungen werden nun Ausführungsbeispiele der Erfindung erläutert.

Es zeigen

Fig. 1 ein Blockschaltbild einer Einrichtung gemäß der Erfindung,
Fig. 2 das Signalspektrum des Fernsehsignals vor und nach der Abtastung,
Fig. 3 den Aufbau der digitalen Vorverarbeitungsstufe,
Fig. 4 eine Variante zu Fig. 1 mit anderer Mischfrequenzaufbereitung.

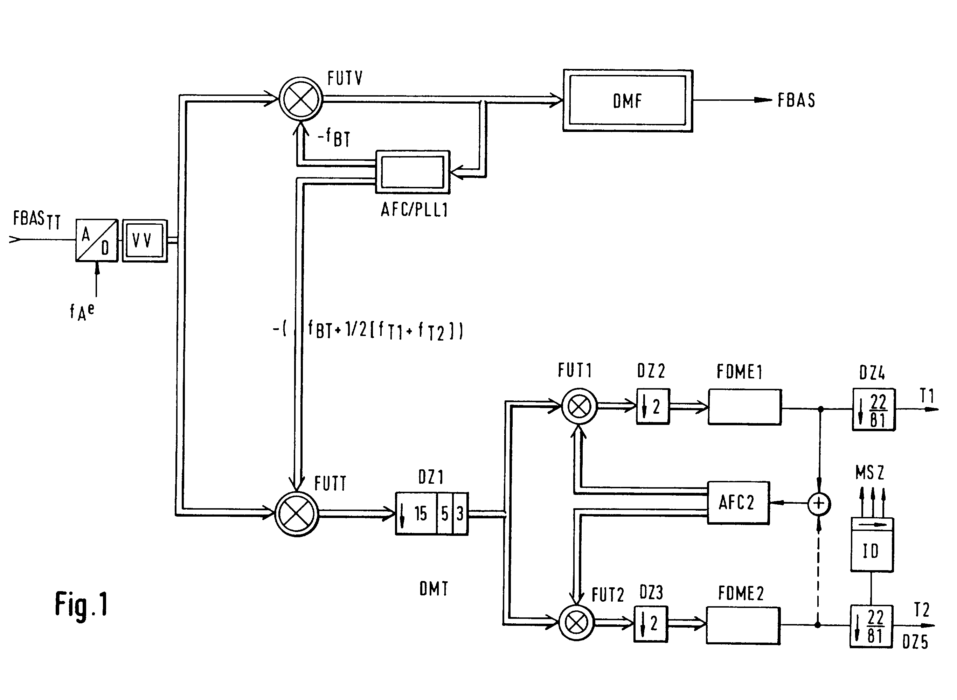

Das Blockschaltbild gemäß Fig. 1 zeigt die Einzelbaugruppen einer Einrichtung zur digitalen Demodulation der Bild- und Tonanteile eines analogen reellwertigen Fernsehsignals $FBAS_{TT}$, welche das in Zwischenfrequenzlage vorliegende Fernsehsignal mit einem Bildträger bei 38,9 MHz (CCIR-Norm) mittels einer Abtasteinheit - A/D-Wandler - geschlossen abtastet. Falls das Fernsehsignal in Zwischenfrequenzlage bereits als Digitalsignal vorliegt, kann die Abtasteinheit entfallen. Die Abtastfrequenz beträgt vorzugsweise

$$f_A^e = 28,27\overline{63} \text{ MHz} .$$

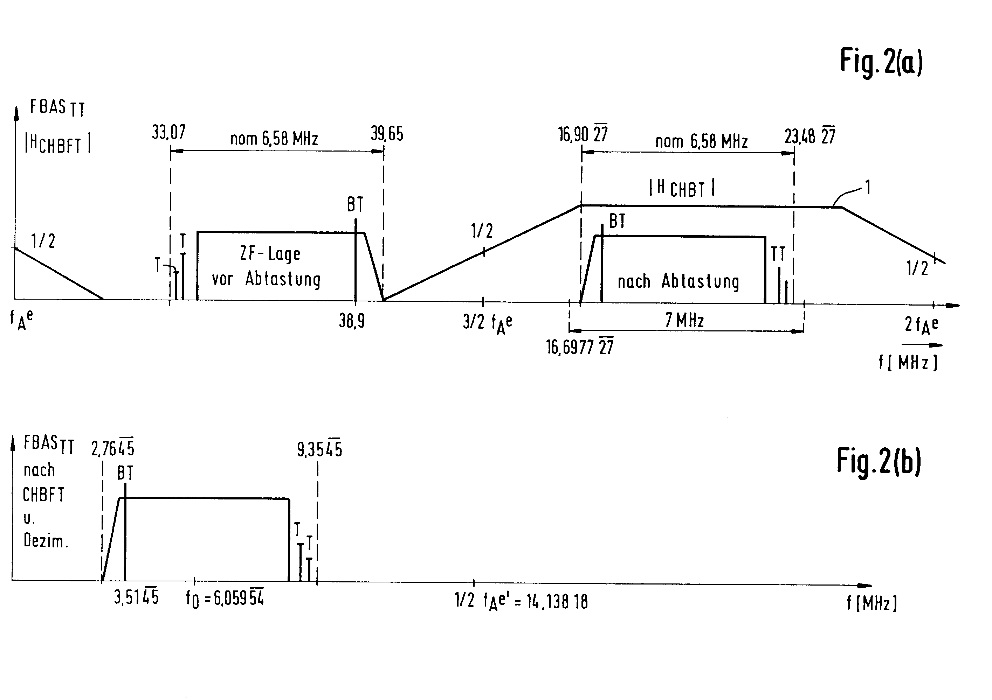

Fig. 2 zeigt das Fernsehsignal vor und nach der Abtastung (a) und nach Filterung und Dezimation (b). Das abgetastete reellwertige Fernsehsignal wird mittels einer digitalen Vorverarbeitungsstufe VV in ein komplexwertiges Digitalsignal überführt und spektral so verschoben, daß die Mittenfrequenz des komplexwertigen Digitalsignals bei der Frequenz 0 erscheint. Zur Verdeutlichung, wo das Digitalsignal in komplexwertiger Form vorliegt, sind in den Figuren die entsprechenden Signalpfade und Baugruppen mit Doppelstrichen gekennzeichnet.

Bei der Abtastung mit $f_A^e = 28,27\overline{63}$ MHz ist vorausgesetzt, daß durch ein vorgeschaltetes analoges ZF-Filter eine ausreichende Bandbegrenzung erreicht wird. Falls kein solches ZF-Filter vorgesehen ist, sollte ein Antialiasing-Filter AAF vorgeschaltet werden, welches das Fernsehsignal mit der Nutzbandbreite B so begrenzt, daß sich durch die Abtastung mit einer Abtastrate $f_A > 2B$ keine spektralen Überlappungen oder Überfaltungen mit dem Nutzspektrum oder dessen Spiegelfrequenzen ergeben. Nach der Analog-Digital-Umsetzung A/D ist das Fernsehsignal mit $f_A$ überabgetastet, um dann anschließend mit einem komplexen Digitalfilter CHBFT gefiltert und dezimiert zu werden durch Abtastung mit

$$f_A = f_A^e/2 = 14,13\overline{81} \text{ MHz.}$$

Das komplexe Digitalfilter CHBFT extrahiert das Signalspektrum in Regellage, wie es für die nachfolgende TV-Demodulation benötigt wird.

Das komplexe Digitalfilter CHBFT ist vorzugsweise als L-Band Filter (komplexes Nyquistfilter) ausgebildet, wobei L ein ganzzahliger Dezimationsfaktor ist. Bei einem komplexen Nyquistfilter ist für den aufwandsgünstigsten Fall der mittlere Koeffizient reell 1/L oder rein imaginär j/L. Mit einem Dezimationsfaktor L=2, der die vorherige Überabtastung durch die Abtasteinheit A/D um den Faktor 2 wieder rückgängig macht, wird der mittlere Koeffizient 1/2 bzw. j/2 (Halbbandfilter).

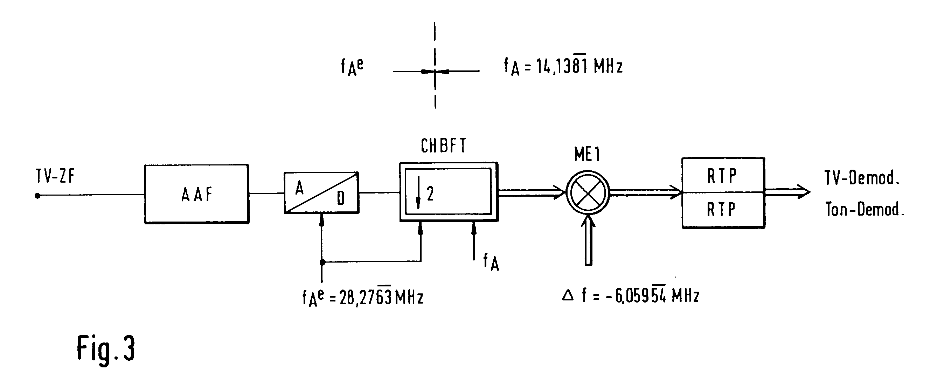

Fig. 3 zeigt die Baugruppen der Vorverarbeitungsstufe im Detail. Dieser Aufbau stimmt teilweise mit der Realisierung gemäß P 43 37 134 überein. Das Prinzip des komplexen Halbbandfilters CHBFT an sich ist in der DE-PS 36 21 737 beschrieben. Der Betrag der Übertragungsfunktion des komplexen Halbbandfilters $|H_{CHBFT}|$ ist in Fig. 2 dargestellt, mitsamt den Abtastfrequenzen

$f_A^e$ bzw. $f_A$ und den Bandgrenzen. Die jeweilige Lage des Bildträgers ist mit BT gekennzeichnet und die Lage der Tonträger mit TT. Für die Frequenzverschiebung des komplexwertigen Digitalsignals derart, daß die Mittenfrequenz des komplexwertigen Digitalsignals bei der Frequenz 0 bzw. $f_{BT}$ = -2,545 MHz erscheint, ist wie bei der Realisierung gemäß P 43 37 134 am Ausgang des komplexen Halbbandfilters CHBFT eine komplexe Mischeinrichtung ME1 vorgesehen, der eine Mischfrequenz von $f_o = 6{,}059\overline{54}$ MHz zugeführt wird. Das Ausgangssignal der komplexen Mischeinrichtung ME1 wird einem Paar identischer Tiefpässe RTP mit reellen Koeffizienten zugeführt, die rekursiv oder nichtrekursiv realisiert werden können. Ein Tiefpaß ist für den Realteil, der andere für den Imaginärteil des zu verarbeitenden komplexen Signals vorgesehen. Ein solches Filterpaar mit reellen Koeffizienten - es ist also keine Überkopplung von Realteil und Imaginärteil vorhanden - ist deshalb für die Filterung des komplexen Signals einsetzbar, da die Mittenfrequenz des Spektrums des komplexen (Zeit-)Signals bei f = 0 liegt. Diese Tiefpässe können als linearphasige FIR Filter aufwandsarm realisiert werden. Mit einem Filtergrad von N = 105 für das RTP Filterpaar kann eine Nachbarkanalselektion von $a_s$ = 75 dB erreicht werden.

Das Ausgangssignal der Vorverarbeitungsstufe VV wird nun in zwei Zweigen weiterverarbeitet und zwar in einem ersten Zweig für die Bilddemodulation und in einem für die beiden Tonsignale T1 und T2 gemeinsamen zweiten Zweig. Im ersten Zweig ist eine erste komplexe Mischeinrichtung FUTV vorgesehen, deren Mischfrequenz so gewählt ist, daß der Bildträger $f_{BT}$ nach der Mischung bei der Frequenz 0 erscheint. An die komplexe Mischeinrichtung schließt sich ein komplexer digitaler Demodulator DMF für den Bildanteil des Fernsehsignals an, mittels dessen das FBAS Signal mit 14, $138\overline{18}$ MHz extrahiert wird. Die komplexe Mischeinrichtung FUTV ist mit einer Frequenz- und/oder Phasenregelschleife AFC/PLL1 ausgestattet, die es ermöglicht, daß der Bildträger BT exakt bei der Frequenz 0 zu liegen kommt und die korrekte Phase aufweist (Einrastzustand).

Im zweiten Zweig ist ein digitaler Demodulator DMT für die Tonanteile vorgesehen, welcher bezogen auf die Vorverarbeitungsstufe VV zuerst eine zweite komplexe Mischeinrichtung FUTT zur gemeinsamen Verarbeitung der Tonsignale (im Beispiel sind zwei Tonträger TT angenommen) aufweist. Die komplexe Trägerschwingung für die Mischeinrichtung FUTT wird von der Trägerschwingung der Mischeinrichtung FUTV abgeleitet. Im in Fig. 1 dargestellten Ausführungsbeispiel ist die Frequenz- und/oder Phasenregelschleife AFC/PLL1 so ausgestaltet, daß an ihrem ersten Ausgang die Bildträgerfrequenz $f_{BT}$ für die Mischeinrichtung FUTV erscheint und an ihrem zweiten Ausgang die um den arithmetischen Mittelwert der beiden Tonträgerfrequenzen $f_{T1}$ und $f_{T2}$ versetzte Bildträgerfrequenz

$$f_{BT} + 1/2\,[f_{T1} + f_{T2}].$$

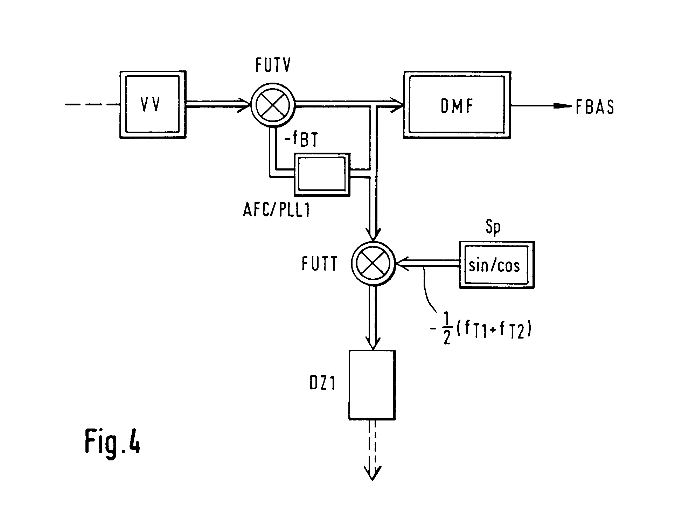

In einer Alternativlösung, dargestellt in Fig. 4, wird die komplexe Trägerschwingung $f_{BT} + 1/2\,[f_{T1} + f_{T2}]$ für die Mischeinrichtung FUTT nicht über die Frequenz- und/oder Phasenregelschleife AFC/PLL1 abgeleitet, sondern es wird das Ausgangssignal der Mischeinrichtung FUTV unter Zusatz des komplexen Trägers mit der Frequenz des arithmetischen Mittelwertes $1/2\,(f_{T1} + f_{T2})$ der Tonträgerfrequenzen $f_{T1}$ und $f_{T2}$ gemischt. Diese komplexe Trägerschwingung kann durch Umwandlung der reellen Tonträger in den komplexen Bereich, bzw. der bekannten Weaver-Methode durchgeführt werden. Im einfachsten Fall dient dazu eine Speichereinrichtung Sp mit einer sin/cos-Tabelle. Die Speichereinrichtung kann entweder als ROM oder RAM Standard-Chip ausgestaltet sein, wo die Abtastwerte der sin/cos-Werte entweder fest oder veränderbar abgespeichert werden.

Der Ausgang der Mischeinrichtung FUTT führt zu einer Dezimationsfiltereinrichtung DZ1, welche eine Abtastratenwandlung um Q = 1/M, wobei M eine natürliche Zahl ist, beispielsweise um 15, d.h. von 14,3818 MHz auf $942{,}\overline{54}$ kHz durchführt. Diese Dezimationsfiltereinrichtung kann analog zur Dezimationsfiltereinrichtung gemäß DE PS 36 21 737 aufgebaut sein. Solche Dezimationsfiltereinrichtungen sind allgemein auch in Multirate Digital Signal Processing von R.E. Crochiere und L.R. Rabiner, Prentice-Hall Inc. Englewood Cliffs, NJ. USA, beschrieben. Es kommen rekursive oder nichtrekursive FIR-Filter, die effizient als Polyphasenfilter realisierbar sind, in Frage. Vorzugsweise erfolgt die Dezimation in zwei Stufen mit den Dezimationsfaktoren 5 und 3. Das Ausgangssignal der Dezimationsfiltereinrichtung DZ1 wird in parallelen Zweigen jeweils getrennt für die beiden Tonsignale T1 und T2 einer dritten und vierten komplexen Mischeinrichtung FUT1 bzw. FUT2 zugeführt. Die Trägerschwingungen für die beiden Mischeinrichtungen FUT1 und FUT2 lassen sich, wie noch erläutert wird, gemeinsam ableiten. Den beiden Mischeinrichtungen FUT1 und FUT2 ist jeweils eine Dezimationsfiltereinrichtung DZ2 bzw. DZ3 zur Abtastratenwandlung um den Faktor 2, d.h. auf $471{,}\overline{27}$ kHz nachgeschaltet. Daran schließt sich jeweils ein komplexer Ton-FM-Demodulator FMDE1 bzw. FMDE2 an für jeweils eines der Tonsignale T1, T2.

Solche komplexen Ton-FM-Demodulatoren mit komplexwertigen Eingangs- und reellwertigen Ausgangssignalen sind an sich bekannt (Signal Processing 9, 1985, North Holland, Seiten 263-276 "Equalization Problems in a Digital FM Receiver") und bedürfen daher keiner näheren Erläuterung. Zur frequenzrichtigen Ableitung der Mischfrequenzen für die dritte und vierte Mischeinrichtung FUT1 bzw. FUT2 ist mindestens eine Frequenzregelschleife AFC2 mindestens erster Ordnung vorgesehen. Alternativ kann auch eine kombinierte Frequenz- und Phasenregelschleife vorgesehen sein. Die Frequenzregelschleife AFC2 kann mit einem Frequenzfehlerdetektor realisiert werden gemäß IEEE Transactions on Communications, Vol. 37, No. 2, 1989, Seiten 159-163. Die Frequenzregelschleife AFC2 verarbeitet das Ausgangssignal mindestens eines der beiden FM-Demodulatoren FMDE1 bzw. FMDE2 zu zwei komplexen Trägerschwingungen der Frequenz + 1/2 (f$_{T2}$ - f$_{T1}$) bzw. - 1/2 (f$_{T2}$ - f$_{T1}$) , die sich jeweils aus den Differenzen der beiden Tonträgerfrequenzen ergeben, aber hinsichtlich ihrer Vorzeichen unterschiedlich sind. Zur Erzeugung komplexer Trägerschwingungen aus dem/den reellwertigen Ausgangssignal/en sind in der Frequenzregelschleife wiederum sin/cos-Tabellen abgespeichert. Im Gegensatz zu einer getrennten Tonverarbeitung entsprechend der Anmeldung EP-A-0 683 609, veröffentlicht am 22.11.95, der Anmelderin ist der Aufwand geringer. Zur Dezimation um den Faktor 15 ist nur ein Dezimationsfilter notwendig. Ebenso ist nur eine AFC-Schleife für die Demodulation der beiden Tonträger T1 und T2 notwendig, die zudem noch mit einer sin/cos-Tabelle auskommt. (Frequenz und damit Phase unterscheiden sich nur durch das Vorzeichen). Die AFC-Schleife weist darüber hinaus eine geringere Schleifenverzögerung auf. Zur Gewinnung digitaler Tonsignale mit standardisierten Abtastfrequenzen, z.B. 32 kHz, ist jeweils nur noch eine Dezimation um den Dezimationsfaktor 22/81 erforderlich. Dafür sind die Dezimationsfiltereinrichtungen DZ4 und DZ5 vorgesehen, die vorzugsweise zuerst um den Faktor 2 dezimieren und anschließend um den Faktor 11/81.

Zur Extraktion gegebenenfalls vorgesehener Ton-Identifikationssignale MSZ (Mono, Stereo, Zweiton bzw. Vielfachton) ist eine Einrichtung ID vorgesehen, die vorzugsweise an eine der weiteren oder zusätzlichen Dezimationsfiltereinrichtungen DZ2, DZ3, DZ4, DZ5 angeschlossen ist.

Für die Frequenz- und/oder Phasenregelschleife AFC/PLL1 kann prinzipiell die Lösung gemäß International Conference on Digital Satellite Communications, Kopenhagen, Mai 1992, Seiten B247-B254 verwendet werden.

Als Demodulator DMF für den Bildanteil eignet sich eine bekannte Lösung, z.B. gemäß DE 33 05 918 C2.

**Patentansprüche**

1. Einrichtung zur digitalen Demodulation der Bild- und Tonanteile eines reellwertigen Fernsehsignals, welches in Zwischenfrequenzlage vorliegt, bestehend aus:

   - einer Abtasteinheit (A/D) zur geschlossenen Abtastung des Fernsehsignals in Zwischenfrequenzlage, falls das Fernsehsignal nicht bereits digital in Zwischenfrequenzlage vorliegt,
   - einer digitalen Vorverarbeitungsstufe (VV), die so ausgestaltet ist, daß das abgetastete reellwertige Fernsehsignal in ein komplexwertiges Digitalsignal überführbar ist und spektral so verschiebbar ist, daß die Mittenfrequenz des komplexwertigen Digitalsignals bei der Frequenz 0 erscheint,

   - einer ersten komplexen Mischeinrichtung (FUTV) für das komplexwertige Digitalsignal, wobei die Mischfrequenz so gewählt ist, daß der Bildträger (f$_{BT}$) nach der Mischung bei der Frequenz 0 erscheint,
   - einem digitalen Demodulator (DMF) für den Bildanteil des mittels der ersten komplexen Mischeinrichtung (FUTV) gemischten komplexwertigen Digitalsignals,
   - einem digitalen Demodulator (DMT) für die Tonanteile des komplexwertigen Digitalsignals, welcher eingangsseitig eine zweite komplexe Mischeinrichtung (FUTT) aufweist, deren komplexe Trägerschwingung von der ersten komplexen Mischeinrichtung (FUTV) abgeleitet ist, wobei die Mischfrequenz der zweiten Mischeinrichtung (FUTT) so gewählt ist, daß am Signalausgang der zweiten komplexen Mischeinrichtung (FUTT) die um den arithmetischen Mittelwert der Tonträgerfrequenzen (f$_{T1}$, f$_{T2}$) versetzte ursprüngliche Bildträgerfrequenz(f$_{BT}$+1/2 [f$_{T1}$+f$_{T2}$]) bei der Frequenz 0 erscheint.

2. Einrichtung nach Anspruch 1, dadurch gekennzeichnet, daß der zweiten komplexen Mischeinrichtung (FUTT) eine Dezimationsfiltereinrichtung (DZ1) nachgeschaltet ist zur Umsetzung der komplexwertigen Tonanteilsignale auf eine niedrigere Abtastfrequenz von beispielsweise 1/M der Ausgangsabtastfrequenz der digitalen Vorverarbeitungsstufe (VV), wobei M eine natürliche Zahl, z.B. 15, ist.

3. Einrichtung nach Anspruch 1 oder 2, dadurch gekennzeichnet, daß der Ausgang der zweiten komplexen Mischeinrichtung (FUTT) mit den Eingängen einer dritten bzw. vierten Mischeinrichtung (FUT1, FUT2) direkt oder über die Dezimationsfiltereinrichtung (DZ1) verbunden ist, wobei die Mischfrequenzen der dritten und vierten komplexen Mischeinrichtung (FUT1, FUT2) so gewählt sind, daß nach dem Mischvorgang die Mittenfrequenzen der insbesondere FM-modulierten Tonträger jeweils bei der Frequenz 0 erscheinen.

4. Einrichtung nach Anspruch 3, dadurch gekennzeichnet, daß der dritten und der vierten Mischeinrichtung (FUT1, FUT2) jeweils ein digitaler Ton-FM-Demodulator (FMDE1, FMDE2) nachgeschaltet ist, gegebenenfalls unter jeweiliger Zwischenschaltung je einer weiteren Dezimationsfiltereinrichtung (DZ2, DZ3).

5. Einrichtung nach Anspruch 4, dadurch gekennzeichnet, daß die digitalen Ton-FM-Demodulatoren so ausgebildet sind, daß sie jeweils ein komplexwertiges Eingangssignal in ein reellwertiges Ausgangssignal überführen.

6. Einrichtung nach Anspruch 4 oder 5, dadurch gekennzeichnet, daß zur Ableitung der Mischfrequenzen für die dritte und vierte Mischeinrichtung (FUT1, FUT2) mindestens eine Frequenz- und/oder Phasenregelschleife (AFC2) vorgesehen ist.

7. Einrichtung nach einem der Ansprüche 1 bis 6 , dadurch gekennzeichnet, daß die Bezugsfrequenz/en für die komplexe zweite und/oder dritte bzw. vierte Mischeinrichtung/en (FUTT, FUT1, FUT2) vom Ausgangssignal der ersten komplexen Mischeinrichtung (FUTV) oder von einem Signal in dessen Frequenz- und/oder Phasenregelschleife (AFC/PLL1) abgeleitet ist/sind.

8. Einrichtung nach Anspruch 6 oder 7, dadurch gekennzeichnet, daß die Frequenz- und/oder Phasenregelschleife/n (AFC2) der dritten bzw. vierten Mischeinrichtung (FUT1, FUT2) so ausgestaltet ist/sind, daß sie aus mindestens einem der Ausgangssignale der beiden Ton-FM-Demodulatoren (FMDE1, FMDE2) jeweils ein komplexes Umsetzsignal für die dritte bzw. vierte Mischeinrichtung (FUT1, FUT2) erzeugt, welches aus den Differenzen der Tonträgerfrequenzen abgeleitet ist.

9. Einrichtung nach einem der Ansprüche 4 bis 8, dadurch gekennzeichnet, daß den Ton-FM-Demodulatoren (FMDE1, FMDE2) zusätzliche Dezimationsfiltereinrichtungen (DZ4, DZ5) zur Verminderung der Abtastfrequenz nachgeschaltet sind, wobei der Dezimationsfaktor dieser Dezimationsfiltereinrichtungen insbesondere so gewählt ist, daß für die digital demodulierten Tonsignale standardisierte Abtastfrequenzen, z.B. 32 kHz, erzielbar sind.

10. Einrichtung nach einem der Ansprüche 4 bis 9, dadurch gekennzeichnet, daß eine Einrichtung (ID) zur Extraktion von Ton-Identifikationssignalen vorgesehen ist, die vorzugsweise an eine der weiteren oder der zusätzlichen Dezimationsfiltereinrichtungen (DZ2, DZ3, DZ4, DZ5) angeschlossen ist.

11. Einrichtung nach einem der Ansprüche 1 bis 10, dadurch gekennzeichnet, daß die Abtasteinheit (A/D) so ausgebildet ist, daß das analoge reellwertige Fernsehsignal mit einem Überabtastfaktor von mindestens 2, bezogen auf die Nutzbandbreite des Fernsehsignals in Zwischenfrequenzlage, abtastbar ist.

12. Einrichtung nach Anspruch 11, dadurch gekennzeichnet, daß die digitale Vorverarbeitungsstufe (VV) eine Dezimationsfiltereinrichtung (DE) enthält zur Dezimation des dort aufbereiteten komplexwertigen Digitalsignals um einen Faktor, der dem Überabtastfaktor der Abtasteinheit (A/D) entspricht.

13. Einrichtung nach einem der Ansprüche 1 bis 12, dadurch gekennzeichnet, daß die digitale Vorverarbeitungsstufe (VV) ein Digitalfilter (CHBFT) zur Überführung abgetasteten reellwertigen Fernsehsignals in das komplexwertige Digitalsignal aufweist.

14. Einrichtung nach Anspruch 13, dadurch gekennzeichnet, daß das Digitalfilter (CHBFT) aus einem komplexen L-Band Filter besteht, wobei L einen ganzzahligen Dezimationsfaktor bezeichnet.

**Claims**

1. Device for digital demodulation of the video and audio elements of a real television signal, which is at intermediate frequency, comprising:

 - a sampling unit (A/D) for closed sampling of the television signal at intermediate frequency, if the television signal is not already present in digital form at intermediate frequency,
 - a digital preprocessing stage (VV) which is designed such that the sampled real television signal can be converted into a complex digital signal and can be shifted spectrally such that the mid-frequency of the complex digital signal appears at the frequency 0,
 - a first complex mixing device (FUTV) for the complex digital signal, the mixing frequency being selected such that the video sub-carrier ($f_{BT}$) appears at the frequency 0 after mixing,
 - a digital demodulator (DMF) for the video element of the complex digital signal which is mixed by means of the first complex mixing device (FUTV),
 - a digital demodulator (DMT) for the audio elements of the complex digital signal, which demodulator has on the input side a second complex mixing device (FUTT) whose complex carrier oscillation is derived from the first complex mixing device (FUTV), the mixing frequency of the second mixing device (FUTT) being selected such that the original video sub-carrier frequency ($f_{BT}+1/2\,[f_{T1}+f_{T2}]$), which is offset by the arithmetic mean of the audio sub-carrier frequencies ($f_{T1}$, $f_{T2}$), appears at the frequency 0 at the signal output of the second complex mixing device (FUTT).

2. Device according to Claim 1, characterized in that the second complex mixing device (FUTT) has connected downstream of it a decimation filter device (DZ1) for conversion of the complex audio element signals to a lower sampling frequency of, for example, 1/M of the output sampling frequency of the digital preprocessing stage (VV), M being a natural number, for example 15.

3. Device according to Claim 1 or 2, characterized in that the output of the second complex mixing device (FUTT) is connected to the inputs of a third and a fourth mixing device (FUT1, FUT2) respectively, directly or via the decimation filter device (DZ1), the mixing frequencies of the third and fourth complex mixing devices (FUT1, FUT2) being selected such that the mid-frequencies of, in particular, the FM-modulated audio sub-carriers in each case appear at the frequency 0 after the mixing process.

4. Device according to Claim 3, characterized in that the third and the fourth mixing devices (FUT1, FUT2) in each case have connected downstream of them a digital audio-FM demodulator (FMDE1, FMDE2), possibly with the respective intermediate connection of in each case one further decimation filter device (DZ2, DZ3).

5. Device according to Claim 4, characterized in that the digital audio-FM demodulators are designed such that they in each case convert a complex input signal into a real output signal.

6. Device according to Claim 4 or 5, characterized in that at least one frequency control loop and/or phase locked loop (AFC2) is provided in order to derive the mixing frequencies for the third and fourth mixing devices (FUT1, FUT2).

7. Device according to one of Claims 1 to 6, characterized in that the reference frequency or frequencies for the complex second and/or third or fourth mixing device or devices (FUTT, FUT1, FUT2) is or are derived from the output signal of the first complex mixing device (FUTV) or from a signal in its frequency control loop and/or phase locked loop (AFC/PLL1).

8. Device according to Claim 6 or 7, characterized in that the frequency control loop or loops and/or the phase locked loop or loops (AFC2) of the third and fourth mixing devices (FUT1, FUT2) respectively is or are designed such that it produces in each case one complex conversion signal for the third or fourth mixing device (FUT1, FUT2) from at least one of the output signals of the two audio-FM demodulators (FMDE1, FMDE2), which conversion signal is derived from the differences between the audio sub-carrier frequencies.

9. Device according to one of Claims 4 to 8, characterized in that the audio-FM demodulators (FMDE1, FMDE2) have connected downstream of them additional decimation filter devices (DZ4, DZ5) in order to reduce the sampling frequency, the decimation factor of these decimation filter devices being selected, in particular, such that standardized sampling frequencies, for example 32 kHz, can be achieved for the digitally demodulated audio signals.

10. Device according to one of Claims 4 to 9, characterized in that a device (ID) is provided for extraction of audio identification signals, which device (ID) is preferably connected to one of the further or of the additional decimation filter devices (DZ2, DZ3, DZ4, DZ5).

11. Device according to one of Claims 1 to 10, characterized in that the sampling unit (A/D) is designed such that the analog real television signal can be sampled with an oversampling factor of at least 2, related to the useful bandwidth of the television signal at intermediate frequency.

12. Device according to Claim 11, characterized in that the digital preprocessing stage (VV) includes a decimation filter device (DE) for decimation of the complex digital signal, which is conditioned there, by a factor which corresponds to the oversampling factor of the sampling unit (A/D).

13. Device according to one of Claims 1 to 12, characterized in that the digital preprocessing stage (VV) has a digital filter (CHBFT) for conversion of the sampled real television signal into the complex digital signal.

14. Device according to Claim 13, characterized in that the digital filter (CHBFT) comprises a complex L-band filter, L designating an integer decimation factor.

**Revendications**

1. Installation de démodulation numérique des composantes image et son d'un signal de télévision à valeurs réelles, en fréquence intermédiaire, comprenant :

- une unité de détection (A/D) pour la détection bouclée du signal de télévision en fréquence intermédiaire si le signal de télévision n'est pas déjà sous forme numérique en fréquence intermédiaire,
- un étage de préparatoire numérique (VV) qui transforme le signal de télévision à valeurs réelles, détecté, en un signal numérique à valeurs complexes, et l'on déplace le spectre pour que la fréquence centrale du signal numérique à valeurs complexes apparaisse à la fréquence 0,

- un premier mélangeur complexe (FUTV) pour le signal numérique à valeurs complexes, dont la fréquence est choisie pour que la porteuse image ($f_{BT}$) après mélange apparaisse à la fréquence 0,

- un démodulateur numérique (DMF) pour la composante image du signal numérique à valeurs complexes, mélangées par le premier mélangeur complexe (FUTV),

- un démodulateur numérique (DMT) pour les composantes son du signal numérique à valeurs complexes, ayant en entrée un second mélangeur complexe (FUTT) dont l'oscillation de porteuse complexe est déduite du premier mélangeur complexe (FUTV), la fréquence de mélange du second mélangeur (FUTT) étant choisie pour qu'à la sortie du signal du second mélangeur complexe (FUTT) apparaisse la fréquence de porteuse image ($f_{BT}$ + 1/2 [$f_{T1}$ + $f_{T2}$]) d'origine, avec un décalage selon la moyenne arithmétique des fréquences de porteuse sont ($f_{T1}$, $f_{T2}$), pour apparaître à la fréquence 0.

2. Installation selon la revendication 1, caractérisée en ce que le second mélangeur complexe (FUTT)) est suivi d'un filtre à décimation (DZ1) pour transformer les signaux de la composante son à valeurs complexes selon une fréquence de détection plus faible, par exemple 1/M, de la fréquence de détection de départ de l'étage préparatoire numérique (VV), M étant un nombre entier par exemple égal à 15.

3. Installation selon les revendications 1 ou 2, caractérisée en ce que la sortie du second mélangeur complexe (FUTT) est reliée aux entrées d'un troisième ou quatrième mélangeur (FUT1, FUT2), directement ou par le filtre à décimation (DZ1), les fréquences de mélange du troisième et du quatrième mélangeur (FUT1, FUT2) étant choisies pour qu'après le mélange, les fréquences centrales notamment de la porteuse son à modulation (MF), apparaissent chaque fois à la fréquence 0.

4. Installation selon la revendication 3, caractérisée en ce que le troisième et le quatrième mélangeur (FUT1, FUT2) sont suivis chaque fois par un démodulateur FM son numérique (FMDE1, FMDE2), le cas échéant avec interposition de chaque fois un autre filtre à décimation (DZ2, DZ3).

5. Installation selon la revendication 4,

caractérisée en ce que les démodulateurs FM son numériques sont réalisés pour transformer chaque fois un signal d'entrée à valeurs complexes en un signal de sortie à valeurs réelles.

6. Installation selon la revendication 4 ou 5, caractérisée par une boucle de régulation de fréquence et/ou de phase (AFC2) pour déduire les fréquences de mélange destinées au troisième et au quatrième mélangeur (FUT1, FUT2).

7. Installation selon l'une des revendications 1 à 6, caractérisée en ce que la ou les fréquences de référence pour le second et/ou le troisième ou quatrième mélangeur (FUTT, FUT1, FUT2) sont déduites du signal de sortie du premier mélangeur complexe (FUTV) ou d'un signal de sa boucle de régulation de fréquence et/ou de phase (AFC/PLL1).

8. Installation selon les revendications 6 ou 7, caractérisée en ce que la ou les boucles de régulation de fréquence et/ou de phase (AFC2) du troisième et du quatrième mélangeur (FUT1, FUT2) sont conçues pour générer chaque fois un signal de transformation complexe pour le troisième et le quatrième mélangeur (FUT1, FUT2), à partir d'au moins l'un des signaux fournis par les deux démodulateurs FM son (FMDE1, FMDE2), et qui se déduit de la différence des fréquences porteuses son.

9. Installation selon l'une quelconque des revendications 4 à 8, caractérisée en ce que les démodulateurs FM son (FMDE1, FMDE2) sont suivis par des filtres à démodulation supplémentaires (DZ4, DZ5) pour réduire la fréquence de détection, et le coefficient de décimation de ces filtres est choisi notamment pour que les signaux son démodulés, numériques, correspondent à des fréquences de détection normalisées, par exemple à 32 kHz.

10. Installation selon l'une quelconque des revendications 4 à 9, caractérisée par une installation (ID) pour extraire les signaux d'identification de son, qui est de préférence reliée à l'un du ou des autres filtres à décimation (DZ2, DZ3, DZ4, DZ5).

11. Installation selon l'une quelconque des revendications 1 à 10, caractérisée en ce que l'unité de détection (A/D) est réalisée pour que le signal de télévision à valeurs réelles, analogique, puisse être détecté avec un coefficient de surdétection au moins égal à 2 par rapport à la largeur de la bande utile du signal de télévision en fréquence intermédiaire.

12. Installation selon la revendication 11, caractérisée en ce que l'étage de préparation numérique (VV) comporte un filtre à décimation (DE) pour décimer le signal numérique à valeurs complexes qu'il prépare, selon un coefficient correspondant au coefficient de surdétection de l'unité de détection (A/D).

13. Installation selon l'une des revendications 1 à 12, caractérisée en ce que l'étage de préparation numérique (VV) comporte un filtre numérique (CHBFT) pour transformer le signal de télévision détecté à valeurs réelles, en un signal numérique à valeurs complexes.

14. Installation selon la revendication 13, caractérisée en ce que le filtre numérique (CHBFT) est un filtre complexe à bande L, L étant un coefficient de décimation à nombre entier.

Fig.1

EP 0 683 608 B1

**Fig. 2(a)**

FBAS$_{TT}$

|H$_{CHBFT}$|

33,07    nom 6,58 MHz    39,65    16,90 $\overline{27}$    nom 6,58 MHz    23,48 $\overline{27}$

|H$_{CHBT}$|    1

1/2    BT

T    T    ZF-Lage vor Abtastung    BT    nach Abtastung    TT    1/2

1/2    1/2

f$_A$$^e$    38,9    3/2 f$_A$$^e$    7 MHz    2 f$_A$$^e$

16,6977 $\overline{27}$    f [MHz]

**Fig. 2(b)**

FBAS$_{TT}$ nach CHBFT u. Dezim.

2,76$\overline{45}$    9,35$\overline{45}$

BT    T T

3,51$\overline{45}$    f$_0$ = 6,059$\overline{54}$    1/2 f$_A$$^{e'}$ = 14,138 18    f [MHz]

Fig. 3

Fig.4